# EUROPÄISCHE PATENTSCHRIFT

(11) **EP 0 877 465 B1**
(45) Veröffentlichungstag und Bekanntmachung des Hinweises auf die Patenterteilung: **27.06.2001**
(21) Anmeldenummer: 98106104.7
(22) Anmeldetag: 03.04.1998
(51) Int. Cl.: H02K 41/02

(54) **Vorrichtung zur Erzeugung eines Kraftstosses**
Apparatus for generating a thrust
Appareil pour générer une poussée

(30) Priorität: 09.05.1997 DE 19719596
(43) Veröffentlichungstag der Anmeldung: 11.11.1998
(73) Patentinhaber: Rovema Verpackungsmaschinen GmbH, 35463 Fernwald (DE)
(72) Erfinder: Kammler, Roman, Dr., 67547 Worms (DE); Baur, Walter, Dr., 63584 Gründau (DE)

(56) Entgegenhaltungen:
- PATENT ABSTRACTS OF JAPAN vol. 097, no. 004, 30.April 1997 & JP 08 331832 A (FANUC LTD), 13.Dezember 1996,

## Beschreibung

Die Erfindung betrifft eine Vorrichtung zur Erzeugung eines Kraftstoßes, mit einem elektromagnetischen Linearantrieb, wobei der elektromagnetische Linearantrieb aus einem ruhenden Teil und einem relativ zum ruhenden Teil beweglichen Teil besteht, sowie mit einem vom beweglichen Teil zu beschleunigenden Bauteil.

Es sind bewegliche Teile von elektromagnetischen Linearantrieben (sogenannten Linearmotoren) und zu beschleunigende Bauteile aus Stahl bekannt.

Mit einem elektromagnetischen Linearantrieb können Beschleunigungen bis zum Zwangzigfachen der Erdbeschleunigung erreicht werden.

Die bekannten Vorrichtungen aus Stahl haben den Nachteil, daß sie für extrem hohe Kraftstöße wenig geeignet sind, da ihr bewegliches Teil und ihr zu beschleunigendes Bauteil ein relativ hohes Massenträgheitsmoment haben, und deshalb eine relativ hohe Antriebsleistung für einen hohen Kraftstoß notwendig ist. Eine hohe Antriebsleistung erfordert aber einen relativ großen Linearantrieb, dessen bewegliches Teil ebenso relativ groß ist und deshalb relativ viel Antriebsleistung für sich allein benötigt. Linearantriebe mit hoher Antriebsleistung sind überproportional teuer im Vergleich zu Linearantrieben mit vergleichsweise geringer Antriebsleistung.

Aluminium hätte ein im Vergleich zu Stahl deutlich verringertes Massenträgheitsmoment, dieses wäre aber für extrem hohe Kraftstöße noch zu groß. Kunststoffe als zu beschleunigende Bauteile hätten zwar ein noch geringeres Massenträgheitsmoment als Aluminium, scheiden aber wegen ihres zu geringen Elastizitätsmoduls oder ihrer zu geringen Härte aus. Zudem haben Kunststoffe im allgemeinen den Nachteil, daß sie bei einem Einsatz mit Reibungskräften einen Abrieb erzeugen.

Der Erfindung liegt die Aufgabe zu Grunde, mit elektromagnetischen Linearantrieben der eingangs beschriebenen Art bei gleicher Antriebsleistung deutlich höhere Kraftstöße zu erreichen. Gelöst ist die Aufgabe dadurch, daß das bewegliche Teil und/oder das zu beschleunigende Bauteil aus einer Magnesiumlegierung besteht.

Stahl für das bewegliche Teil bzw., das zu beschleunigende Bauteil wird hierbei derart ersetzt, daß das bewegliche Teil ein deutlich niedrigeres Massenträgheitsmoment und ein ausreichendes Elastizitätsmodul besitzt, ausreichend hart ist, kaum Abrieb aufweist, und sich für extrem hohe Kraftstöße eignet.

Eine Magnesiumlegierung ist relativ leicht und somit sind das Massenträgheitsmoment und die Beschleunigungskräfte deutlich verringert. Die Dichte der Magnesiumlegierung ist mit ca.1,7 kg/dm³ deutlich niedriger als die von Stahl mit 6,3 bis 8,1 kg/dm³, wodurch auch relativ großvolumige Vorrichtungen zur Erzeugung eines Kraftstoßes relativ schnell und mit vergleichsweise geringer Antriebsleistung beschleunigt werden können. Dies ist auch insofem ein Vorteil, als durch die Verringerung der Beschleunigungskräfte die Antriebsmechanik einfacher und die Vorrichtung kostengünstiger wird. Die Steifigkeit (Elastizitätsmodul der Magnesiumlegierung beträgt 4,4 10¹⁰ N/m² und ist für extrem hohe Beschleunigungen ausreichend. Mit einer Brinellhärte (HB) von 200 bis 300 ist die Magnesiumlegierung relativ hart. Je nachdem, was für ein Einsatz vorgesehen ist, kann die Magnesiumlegierung mit einer Beschichtung versehen werden. Der Abrieb der Magnesiumlegierung ist sehr gering.

Vorteilhafte Ausgestaltungen der erfindungsgemäßen Vorrichtung sind in den Ansprüchen 2 bis 14 beschrieben.

Ist die Magnesiumlegierung mit einer Beschichtung versehen, und die Beschichtung ist chemisch inert (Anspruch 2), so ist ein Schutz der Magnesiumlegierung gegenüber chemisch aggressiven Substanzen erreicht. Diese Substanzen könnten zu verpackende Produkte sein, gegen die sich der Kraftstoß richtet.

Ein zuverlässiger Schutz der Magnesiumlegierung ist gegeben, wenn diese eloxiert ist (Anspruch 3).

Von besonderem Vorteil ist die Magnesiumlegierung für eine Quersiegelbacke einer vertikalen oder horizontalen Schlauchbeutelmaschine und deren Träger als Bauteil (Anspruch 4, Anspruch 14). Die Quersiegelbacke ist mittels des Trägers gegen einen quer zu verschweißenden Folienschlauch bewegbar. Die dabei notwendigen Beschleunigungskräfte sind durch den Einsatz der Magnesiumlegierung deutlich verringert. Wegen seiner hohen Wärmeleitfähigkeit und Wärmekapazität ist die Magnesiumlegierung für die heiß betriebene Quersiegelbacke von Vorteil. Die Quersiegelbacke zeigt keine signifikanten Temperaturunterschiede entlang ihrer Siegelfläche, und Wärmeableitungen werden schnell ausgeglichen.

Das gleiche gilt für eine gegen einen längs zu verschweißenden Folienschlauch bewegbare Längssiegelbacke und deren Träger (Anspruch 5) als zu beschleunigendes Bauteil.

Eine Quersiegelbacke kann zudem länger ausgestaltet sein und trotzdem mit einer verringerten Antriebsmechanik und einem kleineren Antrieb versehen sein.

Die Trägheitskräfte bei der Bewegung der Quersiegelbacken sind weiter verringert, wenn analog Anspruch 6 auch ein in einer Quersiegelbacke befindliches, einer Durchtrennung des Folienschlauches dienendes Stechmesser aus einer Magnesiumlegierung besteht.

Für heiß werdende Teile von Verpackungsmaschinen, wie die Quersiegelbacke, die Längssiegelbacke oder das Stechmesser eignet sich insbesondere Mg Ag3 Se2 Zr1 als Magnesiumlegierung (Anspruch 7). Diese Legierung enthält 3% Silber, 2% Selen und 1% Zirkonium und wird auch als MSR-Legierung bezeichnet. Sie ist hitzebeständig bis ca.300 Grad Celsius und hat ansonsten die erwähnten Eigenschaften.

Die 9% Aluminium und 1% Zink enthaltende Magnesiumlegierung Mg Al9 Zn1 eignet sich sowohl für bewegte Teile als auch deren Träger (Anspruch 8), erfüllt sehr gut alle eingangs beschriebenen Eigenschaften einer Magnesiumlegierung und hat, ebenso wie Mg Ag3 Se2 Zr1 oder Mg Al8 Zn1 eine sehr hohe Lastwechselstabilität, was für die extrem hohen Beschleunigungen von großer Wichtigkeit ist.

Ein bewegliches Teil oder ein zu beschleunigendes Bauteil aus einer Magnesiumlegierung kann in kostengünstiger Weise als Gußteil hergestellt werden (Anspruch 9).

Besonders günstig ist das relativ geringe Trägheitsmoment einer Magnesiumlegierung für die Verwendung bei schnell bewegten Teilen bzw. deren Träger, wie z.B. bei zwei rotierenden Backensystemen, die gegenläufig gegeneinander beweglich sind, und wobei jedes Backensystem mindestens eine Quersiegelbacke und einen Träger aufweist. Durch die kontinuierliche Bewegung der Quersiegelbacken können besonders hohe Verpackungsgeschwindigkeiten erzielt werden.

Ist die Vorrichtung Teil eines Kartonierers (Anspruch 10), so führen die mechanischen Eigenschaften der Magnesiumlegierung, ebenso wie bei einem beweglichen Teil einer Produktzuführungeinrichtung (Anspruch 12) oder eines Sammelpackers (Anspruch 13), zur Möglichkeit des Einsatzes größerer Bauteile, die trotzdem mit geringerer Antriebsleistung beschleunigt werden können.

In einer vorteilhaften Ausgestaltung weist der Kartonierer als zu beschleunigendes Bauteil einen gegen einen Kartonzuschnitt und mitsamt dem Kartonzuschnitt durch eine Form bewegbaren Stempel auf (Anspruch 11). Ist der Stempel aus einer Magnesiumlegierung gefertigt, so ist er ausreichend formstabil und kann mit geringem technischen Aufwand und relativ geringer Antriebsleistung hin und her bewegt werden und jeweils mit einem Kraftstoß einen Kartonzuschnitt bei einer Hinbewegung in der Form umformen.

Im folgenden wird die Erfindung an Hand Ausführungsbeispiele darstellender Figuren näher beschrieben. Es zeigt:

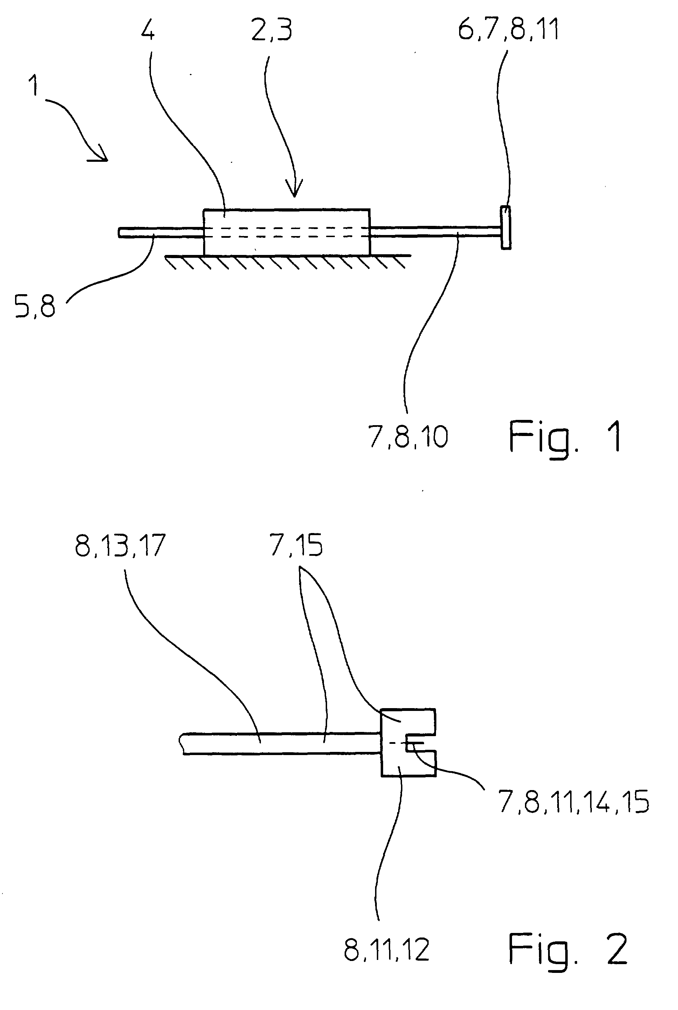

- Figur 1: in einer Seitenansicht eine Vorrichtung zur Erzeugung eines Kraftstoßes, mit einem elektromagnetischen Linearantrieb, welcher aus einem ruhenden Teil und einem relativ zum ruhenden Teil beweglichen Teil besteht, wobei das bewegliche Teil in einen Stempel als zu beschleunigendes Bauteil zum extrem schnellen Verschieben eines Produkts übergeht, und wobei das bewegliche Teil und der Stempel aus einer Magnesiumlegierung bestehen;
- Figur 2: in einer Seitenansicht ein zu beschleunigendes, als Quersiegelbacke und deren Träger ausgestaltetes, zu beschleunigendes Bauteil, wobei in der Quersiegelbacke ein ausschiebbares Stechmesser vorgesehen ist;

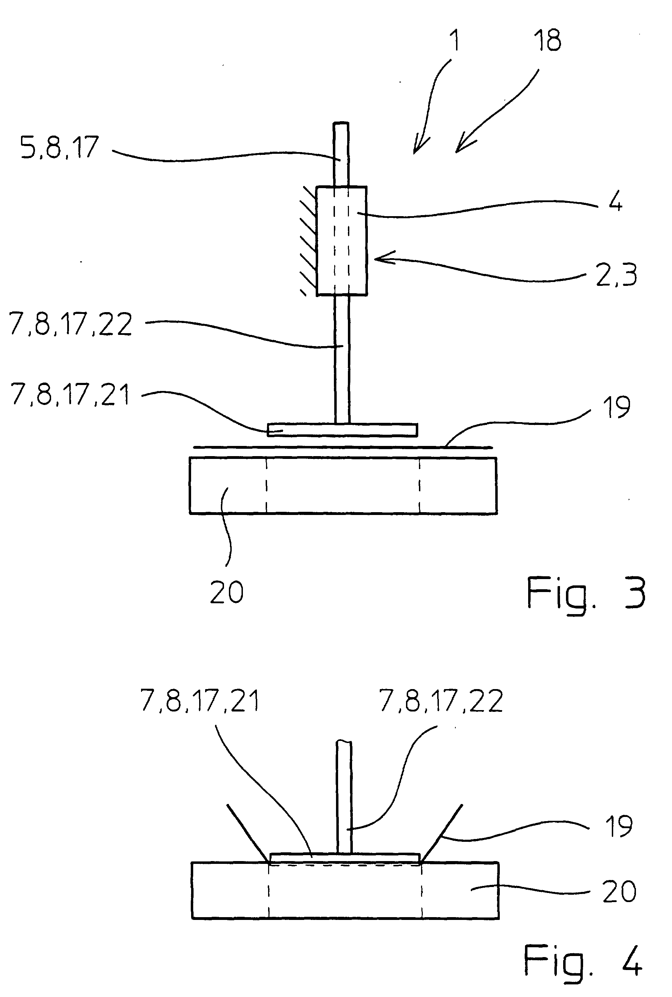

- Figur 3: in einer Seitenansicht einen von einem elektromagnetischen Linearantrieb angetriebenen Kartonierer als zu beschleunigendes Bauteil, wobei der Kartonierer gegen einen Kartonzuschnitt und mitsamt dem Kartonzuschnitt durch eine Form bewegbar ist, und das bewegliche Teil des elektromagnetischen Linearantriebs und das zu beschleunigende Bauteil aus einer Magnesiumlegierung bestehen, sowie
- Figur 4: in einer Seitenansicht einen Ausschnitt aus Figur 3, jedoch mit bereits in die Form eingeführtem Kartonierer.

Bei einer Vorrichtung 1 zum Erzeugen eines Kraftstoßes ist als Antrieb 2 ein elektromagnetischer Linearantrieb (Linearmotor ) 3 vorgesehen (Figur 1). Der Linearantrieb 3 besteht aus einem ruhenden Teil 4 und einem relativ zum ruhenden Teil 4 beweglichen Teil 5. Das bewegliche Teil 5 geht in eine Stange 10 und einen Stempel 6 als zu beschleunigendes Bauteil 7 über. Das bewegliche Teil 5 und das zu beschleunigende Bauteil 7 bestehen aus einer Magnesiumlegierung 8. Die Magnesiumlegierung 8 ist eloxiert und weist somit eine chemisch inerte Beschichtung 9 auf.

Wegen ihrer geringen Massenträgheitsmomente sind das bewegliche Teil 5 und das zu beschleunigende Bauteil 7 mittels einer relativ niedrigen Antriebsleistung antreibbar, so daß der Linearantrieb 3 relativ klein und somit kostengünstig ausgestaltet sein kann. Die geringe Masse für das zu beschleunigende Bauteil 7 wird durch dessen hohe Steifigkeit ermöglicht. Infolge seiner hohen Härte ist der Stempel 6 abriebssicher. Selbst extrem schnelle, reibende Bewegungen des Stempels 6 sind möglich. Der Stempel 6 ist wärmestabil bis ca.300 Grad Celsius, da er aus der Magnesiumlegierung 8 Mg Ag3 Se2 Zr1 11 besteht.

Beim Ausführungsbeispiel der Figur 2 ist als zu beschleunigendes Bauteil 7 eine Quersiegelbacke 12 mit einem Träger 13 einer vertikalen Schlauchbeutelmaschine vorgesehen. Die Quersiegelbacke 12 wird mittels (nicht dargestellter) Heizpatronen auf ca.250 Grad Celsius erhitzt, um mit ihr den Kunststoff eines Schlauchbeutels zu verschweißen. In der Quersiegelbacke 12 befindet sich ein ausfahrbares Stechmesser 14, welches ebenfalls ein zu beschleunigendes Bauteil 7 ist. Das Stechmesser 14 dient dem Abtrennen eines verschweißten Schlauchbeutels von einem Folienschlauch.

Die Quersiegelbacke 12 ist aus einer Magnesiumlegierung 8 gefertigt, ebenso die Träger 13 der Quersiegelbacke 12 und das Stechmesser 14. Die Magnesiumlegierung 8 ist eloxiert und somit von einer chemisch inerten Beschichtung 9 umgeben.

Die zu beschleunigenden Teile 7 sind Gußteile 15. Während die heiße Quersiegelbacke 12 und das heiße Stechmesser 14 aus Mg Ag3 Se2 Zr1 11 als Magnesiumlegierung 8 sind, wurde für den Träger 13 Mg Al9 Zn1 17 gewählt.

Beide Magnesiumlegierungen 8 haben eine im Vergleich zu Stahl deutlich niedrigere Dichte, und weisen somit deutlich geringere Gewichtskräfte und Massenträgsheitsmomente auf. Die Quersiegelbacke 12, der Träger 13 und das Stechmesser 14 können somit mit verringertem technischen Aufwand bewegt werden. Sie weisen eine ausreichende Steifigkeit für ihren Zweck auf. Die Quersiegelbacke 12 und das Stechmesser 14 sind für den Verpackungsvorgang ausreichend hitzebeständig. Die Quersiegelbacke 12 hat sowohl eine hohe Wärmeleitfähigkeit als auch eine hohe Wärmekapazität, was zu einer gut reproduzierbaren, sicheren und schnellen Verschweißung des Schlauchbeutels führt. Der Träger 13 könnte aber auch aus der Legierung Mg Ag3 Se2 Zr1 11 gefertigt werden.

Beim Ausführungsbeispiel der Figuren 3 und 4 ist die Vorrichtung 1 Teil 2 eines Kartonierers 18. Der Kartonierer 18 weist als zu beschleunigendes Bauteil 7 einen gegen einen Kartonzuschnitt 19 und mitsamt dem Kartonzuschnitt 19 durch eine Form 20 bewegbaren Stempel 21 auf. Der Stempel 21 und sein Träger 22 sind aus Mg A19 Zn1 17 als Magnesiumlegierung 8 gefertigt und unbeschichtet. Ebenfalls aus Mg Al9 Zn1 17 besteht das bewegliche Teil 5 eines den Stempel 21 für jeden Faltvorgang einen Kraftstoß versetzenden elektromagnetischen Linearantriebs 3.
- 1: Vorrichtung
- 2: Antrieb
- 3: elektromagnetischer Linearantrieb
- 4: ruhendes Teil
- 5: bewegliches Teil
- 6: Stempel
- 7: Bauteil
- 8: Magnesiumlegierung
- 9: Beschichtung
- 10: Stange
- 11: xMg Ag3 Se2 Zr1
- 12: Quersiegelbacke
- 13: Träger
- 14: Stechmesser
- 15: Gußteil
- 17: Mg Al9 Zn1
- 18: Kartonierer
- 19: Kartonzuschnitt
- 20: Form
- 21: Stempel
- 22: Träger

## Patentansprüche

1. Vorrichtung zur Erzeugung eines Kraftstoßes, mit einem elektromagnetischen Linearantrieb, wobei der elektromagnetische Linearantrieb aus einem ruhenden Teil und einem relativ zum ruhenden Teil beweglichen Teil besteht, sowie mit einem vom beweglichen Teil zu beschleunigenden Bauteil, dadurch gekennzeichnet, daß das bewegliche Teil (5) und/oder das zu beschleunigende Bauteil (7) aus einer Magnesiumlegierung (8) besteht.

2. Vorrichtung nach Anspruch 1, dadurch gekennzeichnet, daß die Magnesiumlegierung (8) mit einer Beschichtung (9) versehen ist, und die Beschichtung (9) chemisch inert ist.

3. Vorrichtung nach Anspruch 2, dadurch gekennzeichnet, daß die Magnesiumlegierung (8) eloxiert ist.

4. Vorrichtung nach Anspruch 1, Anspruch 2 oder Anspruch 3, dadurch gekennzeichnet, daß das Bauteil (7) eine Quersiegelbacke (12) einer vertikalen Schlauchbeutelmaschine (1) ist.

5. Vorrichtung nach Anspruch 1, Anspruch 2 oder Anspruch 3, dadurch gekennzeichnet, daß das Bauteil eine Längssiegelbacke mit Träger einer vertikalen Schlauchbeutelmaschine (1) ist.

6. Vorrichtung nach Anspruch 4, dadurch gekennzeichnet, daß das Bauteil (7) ein in einer Quersiegelbacke (12) einer vertikalen Schlauchbeutelmaschine befindliches, ausschiebbares Stechmesser (14) ist.

7. Vorrichtung nach Anspruch 4, Anspruch 5 oder Anspruch 6, dadurch gekennzeichnet, daß die Quersiegelbacke (12) bzw. die Längssiegelbacke bzw. das Stechmesser (14) aus der Magnesiumlegierung (8) Mg Ag 3 Se 2 Zr 1 (16) besteht.

8. Vorrichtung nach Anspruch 1, dadurch gekennzeichnet, daß als Magnesiumlegierung (8) für das bewegliche Teil (5) bzw. das Bauteil (7) Mg Al 9 Zn 1 (17) oder Mg Al8 Zn1 vorgesehen ist.

9. Vorrichtung nach Anspruch 1, dadurch gekennzeichnet, daß das bewegliche Teil (7) bzw. das Bauteil (7) ein Gußteil (15) ist.

10. Vorrichtung nach Anspruch 1, dadurch gekennzeichnet, daß die Vorrichtung (1) Teil eines Kartonierers (18) ist.

11. Vorrichtung nach Anspruch 10, dadurch gekennzeichnet, daß der Kartonierer (18) als zu beschleunigendes Bauteil (7) einen gegen einen Kartonzuschnitt (19) und mitsamt dem Kartonzuschnitt (19) durch eine Form (20) bewegbaren Stempel (21) aufweist.

12. Vorrichtung nach Anspruch 1, dadurch gekennzeichnet, daß das zu beschleunigende Bauteil eine Produktzuführeinrichtung ist.

13. Vorrichtung nach Anspruch 1, dadurch gekennzeichnet, daß das zu beschleunigende Bauteil ein Aggregat eines Sammelpackers ist.

14. Vorrichtung nach Anspruch 1, dadurch gekennzeichnet, daß das zu beschleunigende Bauteil Teil einer horizontalen Schlauchbeutelmaschine ist.

## Claims

1. A device for generating an impulse, having an electromagnetic linear drive, the electromagnetic linear drive being composed of a stationary part and a part movable relative to the stationary part, as well as having a component to be accelerated by the movable part, characterised in that the movable part (5) and/or the component (7) to be accelerated are made of a magnesium alloy (8).

2. A device according to Claim 1, characterised in that the magnesium alloy (8) is provided with a coating (9), and the coating (9) is chemically inert.

3. A device according to Claim 2, characterised in that the magnesium alloy (8) is anodised.

4. A device according to Claim 1, Claim 2 or Claim 3, characterised in that the component (7) is a transversal sealing jaw (12) of a vertical machine (1) for bag forming, filling and sealing.

5. A device according to Claim 1, Claim 2 or Claim 3, characterised in that the component is a longitudinal sealing jaw - with support - of a vertical machine (1) for bag forming, filling and sealing.

6. A device according to Claim 4, characterised in that the component (7) is an extendible piercing knife (14) located in a transversal sealing jaw (12) of a vertical machine for bag forming, filling and sealing.

7. A device according to Claim 4, Claim 5 or Claim 6, characterised in that the transversal sealing jaw (12) or the longitudinal sealing jaw or the piercing knife (14) is made of the magnesium alloy (8) Mg Ag3 Se2 Zr1 (16).

8. A device according to Claim 1, characterised in that Mg Al9 Zn1 (17) or Mg A18 Zn1 is provided as the magnesium alloy (8) for the movable part (5) or the component (7).

9. A device according to Claim 1, characterised in that the movable part (7) or the component (7) is a casting (15).

10. A device according to Claim 1, characterised in that the device (1) is part of a cartoner (18).

11. A device according to Claim 10, characterised in that the cartoner (18) has a ram (21) as a component (7) to be accelerated, which ram (21) is movable against a cardboard blank (19) and, together with the cardboard blank (19), through a mould (20).

12. A device according to Claim 1, characterised in that the component to be accelerated is a product feeding device.

13. A device according to Claim 1, characterised in that the component to be accelerated is a unit of a multiple packer.

14. A device according to Claim 1, characterised in that the component to be accelerated is part of a horizontal machine for bag forming, filling and sealing.

## Revendications

1. Dispositif destiné à produire une impulsion, comportant un dispositif électromagnétique d'entraînement linéaire, le dispositif électromagnétique d'entraînement linéaire étant constitué d'une partie au repos et d'une partie déplaçable par rapport à la partie au repos, ainsi qu'un composant qui doit être accéléré par la partie déplaçable, caractérisé en ce que la partie déplaçable (5) et/ou le composant à accélérer (7) est fait d'un alliage de magnésium (8).

2. Dispositif selon la revendication 1, caractérisé en ce que l'alliage de magnésium (8) est pourvu d'un revêtement (9), et le revêtement (9) est inerte chimiquement.

3. Dispositif selon la revendication 2, caractérisé en ce que l'alliage de magnésium (8) est anodisé.

4. Dispositif selon la revendication 1, la revendication 2 ou la revendication 3, caractérisé en ce que le composant (7) est une mâchoire de soudage transversal (12) d'une ensacheuse verticale (1).

5. Dispositif selon la revendication 1, la revendication 2 ou la revendication 3, caractérisé en ce que le composant est une mâchoire de soudage longitudinal avec support d'une ensacheuse verticale (1).

6. Dispositif selon la revendication 4, caractérisé en ce que le composant (7) est une pointe à percer (14) extractible, qui se trouve dans une mâchoire de soudage transversal (12), d'une ensacheuse verticale.

7. Dispositif selon la revendication 4, la revendication 5 ou la revendication 6, caractérisé en ce que la mâchoire de soudage transversal (12) ou la mâchoire de soudage longitudinal ou la pointe à percer (14) est faite de l'alliage de magnésium (8) Mg Ag3 Se2 Zr1 (16).

8. Dispositif selon la revendication 1, caractérisé en ce qu'il est prévu comme alliage de magnésium (8) pour la partie déplaçable (5) ou le composant (7) Mg A19 Zn1 (17) ou Mg A18 Zn1.

9. Dispositif selon la revendication 1, caractérisé en ce que la partie déplaçable (5) ou le composant (7) est une pièce moulée (15).

10. Dispositif selon la revendication 1, caractérisé en ce que le dispositif (1) fait partie d'une encartonneuse (18).

11. Dispositif selon la revendication (10), caractérisé en ce que l'encartonneuse (18) comporte comme composant (7) à accélérer un piston (21) déplaçable vers une coupe de carton (19) et, avec la coupe de carton (19) à travers un moule (20).

12. Dispositif selon la revendication 1, caractérisé en ce que le composant à accélérer est un dispositif d'amenée de produit.

13. Dispositif selon la revendication 1, caractérisé en ce que le composant à accélérer est un ensemble d'une emballeuse.

14. Dispositif selon la revendication 1, caractérisé en ce que le composant à accélérer fait partie d'une ensacheuse horizontale.
